(19) **Europäisches Patentamt European Patent Office Office européen des brevets**

(11) **EP 2 735 862 B1**

(12) **EUROPEAN PATENT SPECIFICATION**

(45) Date of publication and mention of the grant of the patent:
**15.01.2020 Bulletin 2020/03**

(51) Int Cl.:
***G01N 21/77*** *(2006.01)*

(21) Application number: **12193697.5**

(22) Date of filing: **21.11.2012**

(54) **Optical sensor arrangement and method for measuring an observable**

Optische Sensoranordnung und Verfahren zum Messen einer Observable

Agencement de capteur optique et procédé de mesure d'un élément observable

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**28.05.2014 Bulletin 2014/22**

(73) Proprietor: **Fraunhofer Gesellschaft zur Förderung der angewandten Forschung E.V. 80686 München (DE)**

(72) Inventors:
• **Pergande, Daniel 12203 Berlin (DE)**
• **Heidrich, Helmut 12357 Berlin (DE)**
• **Lützow, Peter 10781 Berlin (DE)**

• **Zamora Gomez, Alethea Vanessa 10117 Berlin (DE)**

(74) Representative: **Pfenning, Meinig & Partner mbB Patent- und Rechtsanwälte Joachimsthaler Straße 10-12 10719 Berlin (DE)**

(56) References cited:
**EP-A1- 2 270 478     EP-A1- 2 515 099 DE-B3-102008 047 658     US-A- 5 663 790 US-A1- 2003 231 826     US-A1- 2004 023 396 US-B1- 6 721 053**

• **ALAN D KERSEY ET AL: "Fiber Grating Sensors", JOURNAL OF LIGHTWAVE TECHNOLOGY, IEEE SERVICE CENTER, NEW YORK, NY, US, vol. 15, no. 8, 1 August 1997 (1997-08-01), XP011028905, ISSN: 0733-8724**

**EP 2 735 862 B1**

**Description**

The invention relates to an optical sensor arrangement for measuring an observable, the arrangement including a light generation circuit, an optical resonance circuit, and a detector unit for detecting a first and second light component from the light generation circuit which has traveled through the optical resonance circuit.

An optical sensor arrangement is also known from EP 2 515 099 A1, where molecules of a particular substance are detected by coupling light of different wavelengths into optical resonators and by then detecting a broadening of the resonance indicating absorption of the light.

Optical sensor arrangements are used for measuring an observable, wherein an observable can be the presence of a specific substance, or other physical properties such as pressure or temperature. Some optical sensor arrangements include optical resonance circuits, which include at least one optical resonator, such as an optical microring resonator, as a very sensitive optical sensor type for sensing an observable, such as a physical property, a chemical compound, or a biological substance in a medium such as a gas or a liquid, the medium being in contact with at least a part of the optical resonator or a covering material of the optical resonator.

Optical resonators have the property of allowing light of a specific frequency that represents a resonance frequency of the optical resonator (i.e., the wavelength of the light multiplied by an integer corresponds to the optical length of the optical resonator) to enter the optical resonator and interfere constructively while light of other wavelengths enters the resonator, but interferes destructively. For the sake of this application, the case of constructive interference is simply termed as entering the resonator, while the destructive interference is termed as not entering the resonator.

Many optical resonators have the property that when a physical condition, such as temperature or pressure, of the surrounding medium changes or a substance, such as a chemical compound or a biological substance, attaches to at least one of the surfaces of the resonator, the optical length of the optical resonator changes, i.e., the resonance frequency of the optical resonator is shifted. The shift in resonance frequency or optical length can be used to determine whether the observable to be sensed has changed or is found. In the case of microring resonators, one often needs to know the optical length without the presence of the observable and how the observable changes the optical length of the resonator. An optical sensor arrangement often utilizes two, preferably identical, optical resonators, one being used for measuring an observable and the other one used as a gauge resonator. However, it is very difficult to produce multiple optical resonators with identical optical resonance properties, for example, with a controlled spectral definition of a resonance peak with an accuracy in the picometer or sub-picometer region. In the case of microrings, production of identical microrings is difficult because the nanostructuring for producing said microrings is afflicted with significant tolerances leading to variations of the resonance frequencies of the microrings.

In order to scan resonance properties of different materials, passive reference resonators have been used. Examples of such resonators can be found in document WO 2011/000494, where the reference resonators are actively controlled through a very sensitive temperature adjustment arrangement so that no or very small resonance shifts occur in the reference resonators. The necessary control units for the temperature adjustment arrangement are very complex and quite costly.

Therefore, it is the objective technical problem to be solved by the claimed subject-matter to design an optical sensor arrangement for measuring an observable that is less prone to production inaccuracies.

The problem may be solved by an optical sensor arrangement including the features of claim 1 and by a method for measuring an observable according to the features of claim 15. Further embodiments, developments, or alternatives of the invention may be accomplished by basing them on features of the dependent claims or the alternatives presented hereafter. However, different embodiments of an optical sensor arrangement may leave out specific features from claim 1 or include alternatives to features found in claim 1.

The optical sensor arrangement for measuring an observable includes at least a light generation circuit for generating a first light component of a first frequency and a second light component of a second frequency. The light generation circuit is optically coupled to an optical resonance circuit, which includes at least a first optical resonator having a first optical length and a drop, where the first optical length is variable depending on the observable.. The optical length of a resonator may be defined by its physical length and the refractive optical index of the material of which the resonator is made or through which the light travels within the resonator. The first and second light components are fed into the optical resonance circuit. The first and second light components entering the optical resonance circuit have the first and second frequencies, where the second frequency is different from the first frequency. Regarding the modes of the first and second light components, there is no specific relation necessary between the first and second light components entering the optical resonator circuit. In particular, the first and second light components entering the optical resonance circuit may be orthogonal to each other in the quantum-mechanical sense, i.e. different quantum states or different modes are said to be orthogonal if their representation in Hilbert space forms a sub-basis of that Hilbert space. Hence, the first and second light components may have different or overlapping polarizations.

The first optical resonator of the optical resonance circuit is configured such that the first light component is fed into the first optical resonator. The second light component is not fed into the first optical resonator.

The first and second light components may be generated by different light sources and may be coupled into the optical resonance circuit separately. The first light component is then fed to an entry port of an optical resonator while the second light component is fed, or travels, along a second optical path. Having two separate optical paths for the first and second light components has the advantage of ensuring that the second light component is not fed into the first optical resonator. However, it is also possible that the first and second light components, while having different frequencies, travel along the same optical path but that only the first light component has the a frequency corresponding to the first optical length of the first optical resonator. Since the second light component has a frequency not corresponding to the optical length of the first optical resonator, the second light component cannot enter the optical resonator and continues to travel along the optical path. This configuration has the advantage that only a single optical path is necessary for feeding the first light component to the first optical resonator and for the second light component which is not absorbed. However, in said configuration it is more difficult to ensure that the second light component does not have a frequency that corresponds to a harmonic of the first optical length.

The optical resonance circuit is coupled to an optical coupler. The coupling is such that the drop port of the first optical resonator is coupled to the optical coupler while the optical path transmitting the second light component is also coupled to the optical coupler. Said coupler is configured for superposing the first light component and the second light component into a superposed light component. The optical coupler can be realized, for example, as a directional coupler, a fiberoptic coupler, or a Mach-Zehnder coupler. If a first and a second light component do not have overlapping polarization, i.e., components of the same polarization, the coupler may comprise a polarization shifter for phaseshifting the first and/or second components such that at least some components of the first and second components correspond to the same mode before the first and second components are superposed. However, if the first and second light components are generated, for example, in the same mode, no mode converter is necessary. If a mode converter arrangement is used, it can be situated between the light generation circuit and the optical resonance circuit or the optical resonance circuit and the coupler.

The superposed light component output from the coupler is directed to a detector unit. The coupling between the detector unit and the coupler can be realized over optical paths, such as optical wires, optical fibers, waveguides, or the like.

Alternatively, the optical coupler may also be realized by focusing the first and second light components onto an identical spot of the detector unit so that the light detected by the detector unit is a superposed wave of the first and second light components. However, while the exact focusing of such a beam may save the use of a physical coupling unit, it requires controlling mechanisms for focusing the beams.

The detector unit coupled to the optical coupler is configured for outputting an output signal representing a frequency difference between the first and second frequencies of the first and second light components, respectively. The detector unit may comprise optoelectronic elements, such as one or more photodiodes and/or photosensitive elements, and electronic equipment, such as an optional power spectrometer or an intensity spectrometer. The output signal of the detector unit can be configured to include a signal with a beat frequency of a superposed optical signal. The electronic spectrometer is preferably attached to the output of the photo detector and transfers the output signal of the photo detector from the time domain to the frequency domain.

Optical wavelengths correspond to frequencies in the terahertz or low petahertz region. Electronic equipment that is capable of following such high frequencies is very hard to design. Since the beat frequency corresponds to wavelength differences, the resulting frequencies of which are accessible to electronic components, simple electronic equipment can be used to determine the beat frequency.

Since the presence of a substance, or the change of a physical property (i.e. an observable to be detected), causes a shift in the optical wavelength and therefore a shift in the resonance frequency of the optical resonator, the presence of the observable also changes the detected beat frequency. Consequently, the presence of the substance or the observable is known through a change in the beat frequency.

The optical length of an optical resonator in a base state is defined by its physical length multiplied by the refractive index of the material it is made of. The optical length relates to the resonance frequencies of the optical resonator through the relation $\nu = \dfrac{c \cdot k}{A}$, where c is the speed of light, k is a natural number between 1 and $\infty$, and A denotes the optical length as defined above. It is obvious that the specific optical length has an influence on the first-order resonance frequency for k = 1 as well as all higher resonances for k = 2,...,$\infty$. The optical resonator may be configured such that the optical length is variable depending on the observable, such as pressure or temperature or the presence or absence of molecules of a specific or biologic compound or substance.

In an embodiment of the optical sensor arrangement, the light generation circuit may comprise at least a first and a second laser, the first laser emitting the first light component and the second laser emitting the second light component. Lasers are well-suited light sources due to their coherence length. Specifically, the first and second lasers may be semiconductor lasers, specifically distributed feedback lasers (DFB-lasers), preferably having similar emission lengths. In particular, the first and/or the second laser may be tunable. Tunable lasers have an advantage when, for example, the optical length of one of the resonators of the optical resonance circuit changes and first (or second, in specific examples) light components can no longer enter the optical resonators. By tuning the lasers, the emission wavelength may be adjusted, and corresponds to an optical length of optical resonator.

In a further embodiment, the first and second lasers are thermally coupled. Since specific embodiments of the claimed subject-matter seek to detect and output a signal representing the beat frequency between the first and second light components and the beat frequency can be described as the difference in frequency between the first and second light components, the measurement accuracy is greatly improved if the phase noise of the two lasers is almost identical. Since one of the reasons why phase noise occurs is thermal fluctuations, thermally coupling the first and second laser may improve the synchronization between the phase noise of the first and second lasers.

A thermal coupling can be achieved, for example, by placing the first and second lasers on the same substrate, f.e. a semiconductor substrate. If semiconductor lasers are used, the distances between the lasers can be rather small, and by placing the lasers on the same substrate the thermal conditions of the lasers can be made almost identical. A further example of thermally coupling the first and second lasers is the placement of the first and second lasers in the same cavity.

In a further embodiment, the light generation circuit further comprises a master laser coupled to the first and second lasers, the master laser being configured for injection locking the first and second lasers.

Injection locking further helps to reduce the problem of differing phase noise between the first and second lasers, which in this embodiment are slave lasers. An embodiment comprising a setup including a master laser and two slave lasers has the advantage that the width of the intermediate frequency between the emission lengths of the first and second slave lasers may be reduced to the hertz region, thus resulting in a very simple setup of the optical sensor arrangement that is nevertheless characterized by a high resolution.

The first and second lasers may be single mode lasers. If a master laser is present, the master laser may also be a single mode laser, and the modes of the master define the modes of the slaves. To ensure this, the master laser may be coupled to the slave lasers by a polarization-maintaining fiber.

However, an optical path may also include a polarization filter for only allowing a specific mode to pass through the optical path.

In a further embodiment, the master laser is arranged on the same substrate as the first and second lasers, thereby thermally coupling the master laser with the first and second lasers, further reducing the synchrony between the phase noises of the first and second lasers.

In a further embodiment the light generation circuit is thermally decoupled from the optical resonance circuit. By thermally decoupling the optical resonance circuit from the light generation circuit, for example, by placing the optical resonance circuit at a distance from the light generation circuit where thermal fluctuations of the light generation circuit do not influence the optical resonance circuit. One possibility of achieving such thermal decoupling is by placing a heat sink between the light generation circuit and the optical resonance circuit. Another method of achieving thermal decoupling of the two circuits is by placing the two circuits on different substrates. The heat sink can be introduced by etching a channel into a common substrate of the light generation circuit and the optical resonance circuit.

In a further embodiment, the observable to be measured is the presence of at least one substance to be detected wherein the first optical resonator is at least partially covered by a covering material for selectively absorbing said substance and wherein the covering material is configured such that the first optical length is changed when the substance contacts the covering material. An example of such a covering material is docking molecules for selectively absorbing molecules of a substance to be detected. In a case where the observable is a physical property such as pressure or temperature, the optical resonator may be configured in such a way that it is within the medium, the temperature or pressure of which is to be measured. The arrangement can be such that the optical resonator is placed on a side of the substrate, which is in contact with the medium of the physical properties to be measured. Using a covering material makes the optical sensor arrangement sense specific observables, making the result of the measurement more reliable.

In a further embodiment, the optical resonance circuit includes a second optical resonator having a second optical length, where the second light component may be fed into the second optical resonator and a drop port of the second optical resonator is coupled to the optical coupler.

By including a second optical resonator, it is ensured that the second light component is of a specific second frequency corresponding to the optical length of the second optical resonator. In an embodiment, the second optical resonator is encapsulated in the sense that it is not exposed to the observable. For example in the case of a sensor arrangement configured to detect temperature, the second optical resonator is arranged to be thermally decoupled from the first optical resonator, for example by placing the optical resonators on different sides of a substrate or by arranging the optical resonators on different substrates. When pressure is the observable, the second optical resonator may be mechanically decoupled from the first optical resonator, for example by placing the second optical resonator on a different surface of a substrate, a different substrate or by placing the second optical resonator at a substantial distance from the first optical resonator to not be influenced by pressure changes affecting the first optical resonator. When a chemical or biological compound, or chemical or biological substance is to be detected, the second optical resonator may be hermetically sealed as to not come into contact with the compound or substance. By encapsulating the second optical resonator, it is ensured that the optical length of second optical resonator is independent of the presence of the substance or the observable. It can be used as a gauge for the optical sensor arrangement. Since the first optical resonator is exposed, such that the observable can influence the first optical resonator, the presence of the observable will cause a shift in resonance frequencies of the first optical resonator and thereby changes the beat frequency between the first and second light components.

In a further embodiment the first and/or second optical resonator may be tuned, i.e., their optical length may be actively influenced by for example purposefully changing the temperature of or stress on the substrate. By tuning the optical resonators, different effects (such as f.e. ageing) acting on the optical resonators may be compensated. In an embodiment using tunable optical resonators and before the optical sensor is exposed to the observable, the resonance frequencies of the first and/or second optical resonator are tuned such that the detector unit detects a maximum amplitude in the beat frequency signal, i.e. from the superposed light component,. Thereafter, the optical sensor arrangement can be used for sensing the observable and changes in the beat frequency are used to determine whether an observable is present in the medium to be analyzed.

Examples for the optical resonators are microring resonators or Fabry-Perot Resonators or photonic crystal resonators, both in macroscopic or microscopic scales, for example being realized on a substrate.

The substrate mentioned in this application may be a semiconductive substrate such as Si, or GeAs or other suitable substrates known in the art such as quartz, for example..

In a further embodiment the optical sensor arrangement includes a control circuit for analyzing the output signal where the control circuit or unit is coupled to the light generation circuit and/or the optical resonance circuit. By coupling the control unit to the light generation circuit, the emission wavelength of the master laser and/or the first laser emitting the first light component can be tuned such that the adjusted wavelength corresponds to a resonance frequency of the first optical resonator. By tuning the master and/or first laser, the amplitude of the signal to be detected at the detector unit can be maximized resulting in a better signal to noise ratio.

Furthermore, the control unit can be used to tune either the first and/or second optical resonator to maximize the amplitude of the output signal of the detector unit before a measurement begins. The tuning of the optical resonators can be interpreted as a gauging procedure before commencing the measurement.

Furthermore, the optical resonators may be tuned and/or modulated by an electro-optic modulator or an acousto-optical modulator or similar devices known in the prior art.

The optical sensor arrangement includes a light generation circuit an optical resonance circuit an optical coupler and a detector unit. The above-mentioned circuits are coupled to each other in the order mentioned. The coupling between the different circuits may include separate optical paths for the first and second light components or a common optical path for the first and second light components. The optical paths can be optical waveguides on a substrate such as ribs or by doping regions forming a waveguide in semiconductor materials. The optical resonators of the optical resonance circuit may be provided on the same substrate as the waveguides such that the evanescent field of the waveguide feeds light coming from the light source through the optical path into the optical resonator and from there to the detector unit or the optical coupler. Further details regarding optical sensor arrangements are found in the following description of exemplary embodiments and the drawings illustrating various aspects of the exemplary embodiments. It is pointed out that features not claimed in the independent or dependent claims but shown in the drawings or described in the corresponding description are, each in its own right, also features of this application. They may be claimed without necessarily including all further features shown or described in the exemplary embodiment. Consequently, any single feature shown in a specific embodiment may be claimed individually. In particular, features described in connection with the optical sensor arrangement may be claimed for the disclosed method and vice versa.

The exemplary embodiments of this application are subsequently explained with reference to Figures 1-5.

Fig. 1 represents an exemplary embodiment of an optical sensor arrangement;
Fig. 2 illustrates the relation of the frequencies of the first and second light components of the embodiment of Fig. 1 and their shifts due to the presence of a substance;
Fig. 3 shows a resulting output signal of an exemplary detector unit, the signal including the beat frequency component;
Fig. 4 shows a further exemplary embodiment of an optical sensor arrangement according to this application; and
Fig. 5 illustrates the tuning of optical resonators and the first light source.

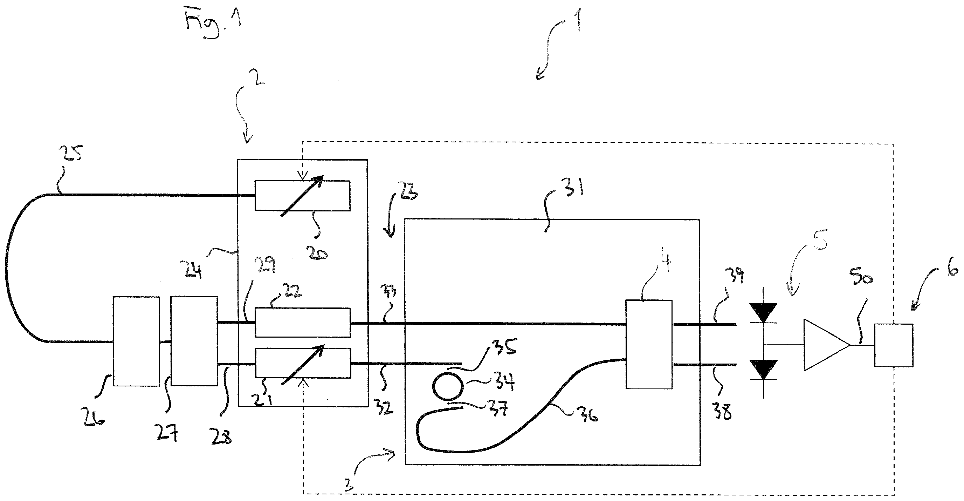

Figure 1 discloses an optical sensor arrangement 1 comprising a light generation circuit 2, an optical resonance circuit 3 including a coupler 4, a detector unit 5 and a control unit 6. The entire optical sensor arrangement may be arranged on a semiconductor substrate or a printed circuit board. However, it is also possible to produce the different circuits on independent substrates and couple the different substrates to each other through optical paths and a common carrier.

Light generation circuit 2 includes a master laser 20, a first slave laser 21 and a second slave laser 22. In the present embodiment the master laser 20 emits light of a TE mode. However it is also possible to emit different modes. In the present embodiment all lasers are arranged on a common substrate 24 which in the present case is a silicon, Si, substrate. All lasers of the embodiment are distributed feedback lasers. The master laser 2 is coupled to the first and second slave lasers 21 and 22, respectively, through an optical path 25, which is a rib made from Si on a Si substrate buffered by a $SiO_x$ layer. However the path may also be realized by an optical fiber. In the present case the optical path 25 is a polarization maintaining path such that the mode of the light generated in the master laser 20 is maintained in the first and second slave lasers. Before light emitted from the master laser and traveling along the optical path 25 enters the first and second lasers, said light enters an optional optical isolator or optical diode 26 prohibiting light reflections into the master laser. Reflections can cause a frequency jitter in the light emitted from the master laser. After the light travels through the optical diode 26 an optical coupler 27 separates the light into a first and second component. These components have identical modes and frequencies as the light entering the optical coupler 27.

The optical coupler 27 may be a directional coupler, a waveguide coupler, a fiberoptic coupler or a Mach-Zehnder coupler. However in the present case it is also possible to use mirrors for splitting the beam into the first and second light components for entering the first and second lasers. Hence the optical coupler 27 may be replaced by a beam splitter and mirror arrangement.

In the present embodiment, the light is transmitted into lasers 21 and 22 through optical paths 28 and 29.

The first and second lasers 21 and 22 are injection locked to the master laser 20. The injection locking reduces or almost eliminates phase noise and helps synchronizing the phase jitter of the first and second lasers. As the optical sensor arrangement 1 shown in Fig. 1 is used for detecting the presence of a substance by analyzing an output signal representing a beat frequency, i.e. a difference of light of a first frequency emitted from the first laser 21 and the second frequency of a second light component of the second laser 22, synchronizing the phase noise improves the signal to noise ratio. However it is also possible to use a first and second laser 21 and 22 without a master laser or to use any other source of coherent light to produce the first and second light components emitted from into the optical resonance circuit 3.

The phase noise of the first and second lasers is further reduced by arranging the master laser 20 and the first and second lasers 21 and 22, respectively, on a common substrate which also acts as a thermal coupler. Hence, phase noise due to temperature differences is reduced.

The optical resonance circuit 3 is arranged on a separate substrate 31 to thermally decouple the optical resonance circuit 3 from the light generation circuit 2. Instead of arranging the optical resonance circuit 3 on a substrate different from substrate 24, the light generation circuit 2 and the optical resonance circuit 3 can also be arranged on the same substrate but be separated by a heat sink 23. The heat sink may be a channel between the light generation circuit and the optical resonance circuit.

The optical resonance circuit includes a first optical path 32 and a second optical path 33 which in the present case are realized as optical wires on the silicon substrate. The first optical path 32 is connected to the output of the first laser 21 and carries the first light component of the first frequency, while the second optical path is also an optical wire carrying the second light component of the second frequency emitted from the second laser. The optical resonance circuit further includes an optical resonator 34 which is coupled to the first optical path 32 by an entry port 35. It is further coupled to a continuation path 36 of the first optical path by a drop port 37. In the present embodiment the optical resonator 34 is a microring resonator. Due to the closed shape of the microring, only light of certain frequencies, i.e. wavelengths, may enter the microring resonator through the entry port 35 and exits the microring resonator through the drop port 37. Furthermore the optical resonator 34 is covered with an active layer of covering material for selectively adsorbing a group of substances such as biological or chemical compounds. When a substance contacts the covering material and adheres to the covering material the refractive index of the optical resonator 34 is changed and thus the optical length of the resonator is shifted. In other words, light which may enter the optical resonator 34 when the optical resonator 34 is not in contact with the substance to be measured, may possibly not enter the optical resonator 34 once the substance has changed the refractive index and has shifted the optical length of the resonator.

The second optical path 33 carrying the light of the second frequency does not feed light into the first optical resonator. The second optical path 33 and the continuation part 36 of the first optical path are both fed into a coupler 4 which in the present case is a Mach-Zehnder coupler. The coupler is an exemplary embodiment for superposing the first light component carried by the first optical path and the second light component carried by the second optical path. Hence light exiting the coupler through the optical paths 38 and 39 is a superposed light component, the amplitude of which is modulated by the envelope of the beat frequency.

The superposed light components carried by the optical paths 38 and 39 are detected by a detector unit which in the present case is a balanced photo detector unit. Since optical wavelengths of a single wavelength may not necessarily be detected by the detector unit, it is advantageous to detect the beat frequency which is much slower than the frequencies of the first and second light components.

The output signal 50 of the detector unit represents an electrical signal modulated by the beat frequency of the first and second light components. The signal itself is forwarded to a control unit, which may further forward the signal to a microcontroller or a computer for further analysis. However the control unit itself may also carry a microcontroller or a CPU for further analysis of signal 50. The control unit itself is adapted and connected to the master laser and the first slave laser. Both the master laser 20 and the first slave laser 21 are tunable lasers. Before the optical sensor arrangement 1 is used for measuring an observable the master laser is powered, thereby stimulating the two slave lasers and depending on whether the first light component is resonant to the optical resonator 34 a beat frequency can be detected at the detector unit 5. If no beat frequency can be detected at detector unit 5, the master laser or the first laser is tuned by the control unit such that the first (and second light) component frequencies are also altered. Once a beat frequency is detected at the detector unit, the control unit further regulates the emission wavelength of the master or a slave laser such that the signal received at the detector unit is maximal.

Thereafter the optical sensor arrangement may be exposed to a medium which may carry the substance to be analyzed. If the medium carries the substance and molecules of the substance adhere to the optical resonator's covering material, the resonance frequency of the optical resonator 34 changes. In return the signal detected at the detector unit 5 becomes weaker or no beat frequency may be detected at all. The control unit 6 now regulates the emission wavelength of the first slave laser 21 until a beat frequency can be detected at the detector unit again. The beat frequency most likely will be different from the beat frequency before the substance had docked to the optical resonator and the change of the beat frequency indicates the presence of the observable.

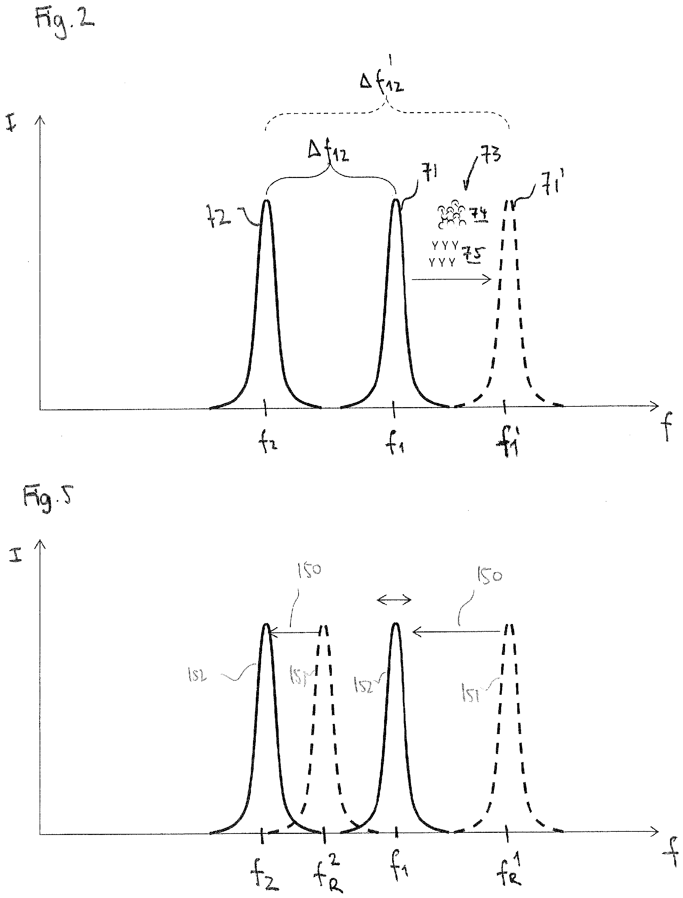

The frequency shifting is further explained by describing **Figure 2**. The spectral content of the first light component 71 is centered on an emission frequency of $f_1$. The spectral content of the second light component 72 emitted from the second laser 22 is centered on an emission frequency of $f_2$. These two frequencies generate a beat frequency $f_1 - f_2 = \Delta f_{12}$ if the phase noise was perfectly synchronized. Assuming that light of the frequency $f_1$ can pass through the microring resonator when no observable affects the microring resonator, the beat frequency $\Delta f_{12}$ can be detected at the detector unit and in the output signal 50. As illustrated by reference sign 73, a substance 74 docks to a detector molecule 75 of a covering material of the optical resonator 34 causing a shift in resonance frequency of the microring resonator from $f_1$ to $f_1'$. If the first laser 21 is not detuned to the frequency $f_1'$, no light is transmitted by the microring resonator and no beat frequency can be detected at the detector unit. Once the first light component 71 is detuned to a different frequency $f_1'$, the now first light component 71' is transmitted by the resonator resulting in a beat frequency of $\Delta f_{12}'$. As the frequency of the second laser has not been changed the beat frequency $\Delta f_{12}'$ is different from the beat frequency $\Delta f_{12}$. Hence the change in the beat frequencies is an indicator of the substance 74 having docked at the docking molecule 75 of the optical resonator 34. The exemplary frequency shift of the first optical resonator illustrated in Figure 2 is such that the spectral content of the resonance frequency and the shifted resonance frequency does not overlap, and thus no light is transmitted by the microring after the observable has shifted the resonance frequency, but before the first laser is tuned. If the observable caused a smaller frequency shift, the microring resonator would still transmit light, but the intensity of the first light component entering the coupler 4 would be smaller, thus resulting in a change of amplitude of the output signal. By tuning the laser to the shifted resonance frequency the intensity of the output signal increases again, thereby indicating that the resonator has been exposed to the observable.

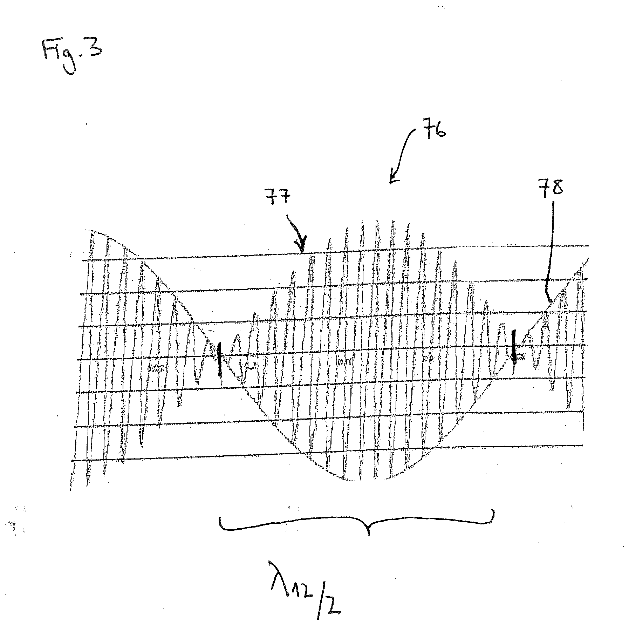

**Figure 3** shows an exemplary output signal of the detector unit of Fig. 1. The output signal 76 is defined by a high frequency part 77 and a low frequency part 78 which modulates the envelope of the signal. It is this modulation frequency that can be measured in the electrical domain. The wavelength of the modulation is $\lambda_{12}/2$ as shown in Fig. 3. The high frequency signal 77 does not need to be processed by the detector unit and can be disposed of. Of course it is also possible to analyze the high frequency signal if such analysis is necessary.

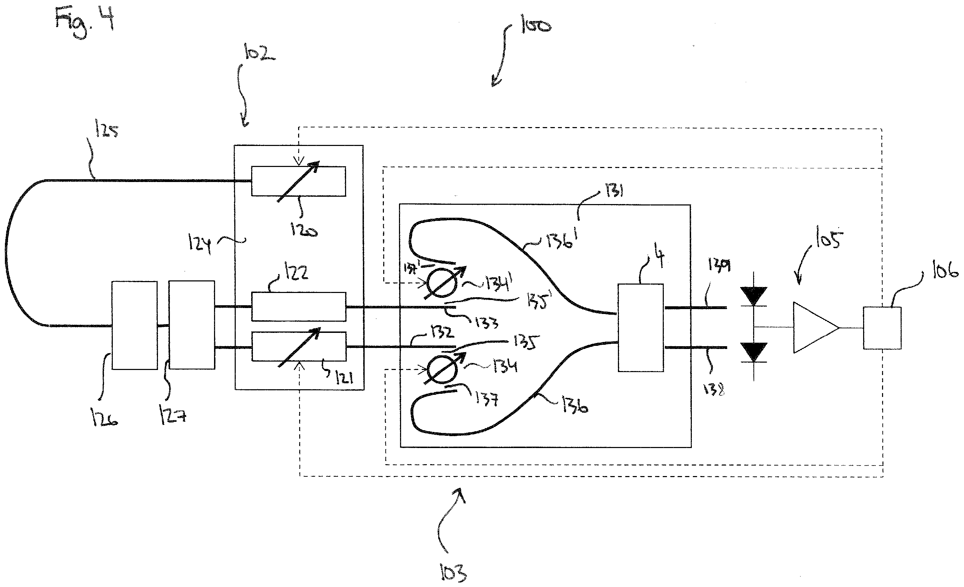

**Figure 4** discloses a further exemplary embodiment of an optical sensor arrangement 100. Optical sensor arrangement 100 includes a light generation circuit 102, an optical resonance circuit 103 and a detector unit 105. Furthermore, a control unit 106 receives the output signal of the detector unit and can tune the master laser first slave laser as well as the two optical resonators.

Regarding the buildup of the light generation circuit, the buildup of the exemplary embodiment of Fig. 1 applies. The light generation circuit 102 comprises a master laser 120 as well as a first and second slave laser 121 and 122, respectively, arranged on a Si substrate 124 for thermal coupling.

Light emitted from the master laser 120 travels through optical path 125 through the optical diode 126 into the beam splitter 127 and enters the first and second slave lasers which are injection locked to the master laser. Light emitted from the different lasers has different frequencies, $f_1$ for the first light component and $f_2$ for the second light component. The light generation circuit is coupled to optical resonance circuit 103, which is provided on a Si substrate 131. Light from the first and second lasers is coupled to the circuit 103 through optical paths 132 and 133. Regarding the optical path for the first light component, light travels through the optical path 132 and may enter the optical resonator 134 at the entry port 135. Light may exit the resonator through the drop port 137 into the continuation path 136 of the first optical path 132. In the embodiment of Fig. 4, the optical resonator 134 is tunable. Hence the optical length of the optical resonator 134 can be actively changed by for example, applying heat, pressure or other physical properties known to change the refractive index of the optical resonator 134. The optical length can also be modulated by an electro-optical modulator.

The optical resonator in the present case is a microring resonator, but could also be a Fabry-Perot resonator. The first light component exits the continued part 136 at the optical coupler 4.

The second light component travels along optical path 133 and may enter an optical resonator 134' through the entry port 135' and may exit into the continuation path 136' of the second optical path 133 through drop port 137'. The continuation path 136' of the second optical path 133 couples to the optical coupler 4. In the embodiment shown in Fig. 4, the second optical resonator 134' is also tunable. However, one or multiple tunable resonators are optional to the optical sensor arrangements described in this application.

The inclusion of the second optical resonator 134' into the optical resonance circuit has the effect that only light of a specific frequency corresponding to the optical length of the second optical resonator 134' reaches the optical coupler 4 through the second optical path.

Optical resonator 134' is encapsulated in the sense that it is not exposed to the observable to be detected. For example, if the substance to be analyzed is a biological or chemical compound, the optical resonator 134' does not include a covering material which allows a substantial number of substance molecules to dock at the optical resonator 134' and thereby alter the effective refractive index of said optical resonator. However, the optical resonator 134' may also be kept in an encapsulated cavity to prevent direct contact between the substance and the resonator. In a case where the observable to be measured is a physical property such as pressure or temperature, the optical resonator 134' can be arranged on a side of the substrate opposite to the side upon which the optical resonator 134 is placed. Alternatively, a heat sink can be placed between the two optical resonators to thermally decouple both resonators.

The first and second light components are superposed in the optical coupler 4 and travel through optical paths 138 and 139 to the detector unit 105 which is a balanced photo detector. The output signal of the balanced photo detector is, in case that both, the first and second, light components emitted by the first and second lasers are transmitted through the respective optical resonators, an output signal modulated by a frequency representing the difference in frequencies between the first and second light components. After gauging the optical sensor arrangement, measurements can be performed as described in the context of the exemplary embodiment of Fig. 1 and the beat frequency between the first and second light components changes due to the appearance of the substance or the change of the physical property and the subsequent shifting of the optical length of the first optical resonator 134..

In order to gauge the optical sensor arrangement 100, the master laser 120 may be tuned close to the resonance frequencies of the optical resonators 134 and 134'.

As is illustrated in **Figure 5,** the frequencies of the first and second light beams ($f_1$ and $f_2$) do not match the corresponding resonance frequencies $f_R^1$ and $f_R^2$ of the respective first and second optical resonators 134 and 134'. By tuning the optical resonators the peaks of the resonance frequencies may be shifted left or right (in the present case to the right indicated by arrows 150). In order to maximize the signal, it is advantageous to maximize the overlap between the resonance peaks 151 and the emission peaks 152. After the optical sensor arrangement 100 has been gauged, the beat frequency without the presence of the observable is measured and the sensor can be used for measuring an observable thereafter. The optical lengths are not actively altered during the measurement, but the optical length of the first optical resonator changes upon exposure to the observable. The measurement may be similar to the measurement mentioned in the description of Fig. 1 and Fig. 2, respectively. In an embodiment, supposing that the exposure to the observable has shifted the resonance frequency $f_R^1$ back to the position shown in Fig. 5, only the first slave laser 121 is tuned such that the frequency $f_1$ matches the shifted resonance frequency $f_R^1$ of the first optical resonator in the presence of the substance. The resulting change in beat frequency is then measured.

## Claims

1. An optical sensor arrangement (1;100) for measuring an observable (74), the arrangement comprising:

   a light generation circuit (2; 102) for generating a first light component of a first frequency and a second light component of a second frequency; a optical resonance circuit (3; 103) including at least a first optical resonator (34; 134) having a first optical length, an entry port (35; 135) and a drop port (36; 137), where the first optical length is variable depending on the observable, wherein the at least one light generation circuit is coupled to the optical resonance circuit such that the first and second light components are fed into the optical resonance circuit and the first light component is fed to the entry port of the first optical resonator via a first optical path (32; 132) and the second light component is not fed into the first optical resonator;

an optical coupler (4) coupled to the optical resonance circuit, where the drop port of the first optical resonator is coupled to the optical coupler via a continuation part (37; 136) of the first optical path and the coupler is configured for superposing the first light component and the second light component and for synchronizing a phase noise between the first and second light component;

a detector unit (5; 105) coupled to the optical coupler and receiving the superposed first and second light components and configured for outputting an output signal (150) representing a frequency difference between the first and second frequencies of the first and second light components, respectively, wherein the output signal is configured to include a signal with a beat frequency of the superposed first and second optical light components,

wherein the observable is a substance which causes the refractive index of the first optical resonator to change and thereby causes a shift of the optical length of the first optical resonator.

2. The optical sensor arrangement of any of the preceding claims, wherein the light generation circuit comprises at least a first and a second laser (21, 22; 121, 122), the first laser emitting the first light component and the second laser emitting the second light component.

3. The optical sensor arrangement of claim 2, wherein the first and second laser are thermally coupled.

4. The optical sensor arrangement of any of claims 2 or 3, wherein the light generation circuit further comprises a master laser (20; 120) coupled to the first and second lasers, the master laser configured for injection locking the first and second laser.

5. The optical sensor arrangement of claim 4, wherein the master laser is thermally coupled with the first and second lasers.

6. The optical sensor arrangement of any of the preceding claims, wherein the light generation circuit is thermally decoupled from the optical resonance circuit.

7. The optical sensor arrangement of any of the preceding claims, wherein the observable is at least one substance to be detected and the first optical resonator is at least partially covered by a covering material (75) for selectively adsorbing said substance and wherein the covering material is configured such that the first optical length is changed when the substance contacts the covering material.

8. The optical sensor arrangement of any of the preceding claims, wherein the optical resonance circuit further includes a second optical resonator (134') having a second optical length, where the second light component is fed into the second optical resonator, and a drop port (137') of the second optical resonator is coupled to the optical coupler.

9. The optical sensor arrangement of claim 8, wherein the second optical resonator is encapsulated.

10. The optical sensor arrangement of any of the preceding claims, wherein the at least first optical resonator is a microring resonator, a Fabry-Perot resonator or a photonic crystal resonator.

11. The optical sensor arrangement of any of the preceding claims, wherein the output signal is an electrical signal.

12. The optical sensor arrangement of any of the preceding claims, wherein the detector unit includes at least one of a photodetector or a balanced photodetector.

13. The optical sensor arrangement of any of the preceding claims, further comprising a control circuit (6; 106) for analyzing the output signal, and coupled to the light generation circuit such that the first frequency of the first light component is tunable to a first resonance frequency corresponding to the first optical length of the first optical resonator.

14. The optical sensor arrangement of claim 13, wherein the control circuit is further coupled to the optical resonance circuit such that the at least first optical length is tunable.

15. A method for measuring an observable with an optical sensor arrangement, the method comprising the following steps:

generating a first light component of a first frequency and a second light component of a second frequency is generated;

feeding the first light component, via a first optical path (32; 132), to an entry port of a first optical resonator of a first optical length, the first optical resonator being part of an optical resonance circuit and also having a drop port;

superpositioning the first light component of the first frequency from the drop port via an continuation part (36; 136) of the first optical path with the light of the second frequency to a superpositioned light;

synchronizing a phase noise between the first and second light component

detecting the superposed first and second light components and extracting an output signal indicative of a frequency difference between the first and second light components, wherein the output signal is configured to include a signal with a beat frequency of the superposed first and second optical light components,

wherein the observable is a substance which causes the refractive index of the first optical resonator to change and thereby causes a shift of the optical length of the first optical resonator.

16. The method of claim 15, wherein the output signal is used for tuning the first frequency of the first light component and/or the first optical length, such that the output signal has a maximal amplitude.

**Patentansprüche**

1. Optische Sensoranordnung (1; 100) zum Messen einer Observablen (74), wobei die Anordnung umfasst:

eine Lichterzeugungsschaltung (2; 102) zum Erzeugen einer ersten Lichtkomponente einer ersten Frequenz und einer zweiten Lichtkomponente einer zweiten Frequenz;

eine optische Resonanzschaltung (3; 103), die mindestens einen ersten optischen Resonator (34; 134) mit einer ersten optischen Länge, einen Eingangs-Port (35; 135) und einen Drop-Port (36; 137) beinhaltet, wobei die erste optische Länge abhängig von der Observablen variabel ist,

wobei die mindestens eine Lichterzeugungsschaltung mit der optischen Resonanzschaltung gekoppelt ist, so dass die erste und die zweite Lichtkomponente in die optische Resonanzschaltung eingespeist werden und die erste Lichtkomponente über einen ersten Strahlengang (32; 132) dem Eingangs-Port des ersten optischen Resonators zugeführt wird und die zweite Lichtkomponente nicht in den ersten optischen Resonator eingespeist wird;

einen mit der optischen Resonanzschaltung gekoppelten optischen Koppler (4), wobei der Drop-Port des ersten optischen Resonators über ein Fortführungsteil (37; 136) des ersten Strahlengangs mit dem optischen Koppler gekoppelt ist und der Koppler zum Überlagern der ersten Lichtkomponente und der zweiten Lichtkomponente und zum Synchronisieren eines Phasenrauschens zwischen der ersten und zweiten Lichtkomponente eingerichtet ist;

eine Detektoreinheit (5; 105), die mit dem optischen Koppler gekoppelt ist und die erste und die zweite Lichtkomponente, die einander überlagern, empfängt, und die zum Ausgeben eines Ausgangssignals (150) eingerichtet ist, das eine Frequenzdifferenz zwischen der ersten und zweiten Frequenzen der ersten bzw. der zweiten Lichtkomponente darstellt, wobei das Ausgangssignal eingerichtet ist, um ein Signal mit einer Schwebungsfrequenz von der ersten und der zweiten optischen Lichtkomponente, die einander überlagern, zu enthalten,

wobei die Observable eine Substanz ist, die bewirkt, dass sich der Brechungsindex des ersten optischen Resonators ändert und dadurch eine Verschiebung der optischen Länge des ersten optischen Resonators bewirkt.

2. Optische Sensoranordnung nach einem der vorhergehenden Ansprüche, wobei die Lichterzeugungsschaltung mindestens einen ersten und einen zweiten Laser (21, 22; 121, 122) umfasst, wobei der erste Laser die erste Lichtkomponente und der zweite Laser die zweite Lichtkomponente emittiert.

3. Optische Sensoranordnung nach Anspruch 2, wobei der erste und der zweite Laser thermisch gekoppelt sind.

4. Optische Sensoranordnung nach einem der Ansprüche 2 oder 3, wobei die Lichterzeugungsschaltung ferner einen mit dem ersten und dem zweiten Laser gekoppelten Masterlaser (20; 120) umfasst, wobei der Masterlaser zum Injection-Locking des ersten und zweiten Lasers eingerichtet ist.

5. Optische Sensoranordnung nach Anspruch 4, wobei der Masterlaser thermisch mit dem ersten und dem zweiten Laser gekoppelt ist.

6. Optische Sensoranordnung nach einem der vorhergehenden Ansprüche, wobei die Lichterzeugungsschaltung thermisch von der optischen Resonanzschaltung entkoppelt ist.

7. Optische Sensoranordnung nach einem der vorhergehenden Ansprüche, wobei die Observable mindestens eine zu erfassende Substanz ist und der erste optische Resonator zumindest teilweise von einem Abdeckmaterial (75) zum selektiven Adsorbieren der Substanz bedeckt ist, und wobei das Abdeckmaterial so eingerichtet ist, dass die erste optische Länge geändert wird, wenn die Substanz mit dem Abdeckmaterial in Kontakt kommt.

8. Optische Sensoranordnung nach einem der vorhergehenden Ansprüche, wobei die optische Resonanzschaltung ferner einen zweiten optischen Resonator (134') mit einer zweiten optischen Länge enthält, wobei die zweite Lichtkomponente in den zweiten optischen Resonator eingespeist wird, und ein Drop-Port (137') des zweiten optischen Resonators mit dem optischen Koppler gekoppelt ist.

9. Optische Sensoranordnung nach Anspruch 8, wobei der zweite optische Resonator eingekapselt ist.

10. Optische Sensoranordnung nach einem der vorhergehenden Ansprüche, wobei der mindestens erste optische Resonator ein Mikroringresonator, ein Fabry-Perot-Resonator oder ein photonischer Kristallresonator ist.

11. Optische Sensoranordnung nach einem der vorhergehenden Ansprüche, wobei das Ausgangssignal ein elektrisches Signal ist.

12. Optische Sensoranordnung nach einem der vorhergehenden Ansprüche, wobei die Detektoreinheit mindestens einen von einem Photodetektor oder einem symmetrischen Photodetektor enthält.

13. Optische Sensoranordnung nach einem der vorhergehenden Ansprüche, ferner umfassend eine Steuerschaltung (6; 106) zum Analysieren des Ausgangssignals, die so mit der Lichterzeugungsschaltung gekoppelt ist, dass die erste Frequenz der ersten Lichtkomponente auf eine erste Resonanzfrequenz abstimmbar ist, die der ersten optischen Länge des ersten optischen Resonators entspricht.

14. Optische Sensoranordnung nach Anspruch 13, wobei die Steuerschaltung ferner mit der optischen Resonanzschaltung gekoppelt ist, so dass die mindestens erste optische Länge abstimmbar ist.

15. Verfahren zum Messen einer Observable mit einer optischen Sensoranordnung, wobei das Verfahren die folgenden Schritte umfasst:

Erzeugen einer ersten Lichtkomponente einer ersten Frequenz und Erzeugen einer zweiten Lichtkomponente einer zweiten Frequenz;
Zuführen der ersten Lichtkomponente über einen ersten Strahlengang (32; 132) zu einem Eingangs-Port eines ersten optischen Resonators mit einer ersten optischen Länge, wobei der erste optische Resonator Teil einer optischen Resonanzschaltung ist und auch einen Drop-Port aufweist;
Überlagern der ersten Lichtkomponente der ersten Frequenz von dem Drop-Port mittels eines Fortführungsteils (36; 136) des ersten Strahlengangs mit dem Licht der zweiten Frequenz zu einem überlagerten Licht;
Synchronisieren eines Phasenrauschens zwischen der ersten und der zweiten Lichtkomponente;
Erfassen der ersten und der zweiten Lichtkomponente, die einander überlagern, und Extrahieren eines Ausgangssignals, das eine Frequenzdifferenz zwischen der ersten und der zweiten Lichtkomponente anzeigt, wobei das Ausgangssignal eingerichtet ist, um ein Signal mit einer Schwebungsfrequenz der ersten und der zweiten optischen Lichtkomponente, die einander überlagern, zu enthalten,
wobei die Observable eine Substanz ist, die bewirkt, dass sich der Brechungsindex des ersten optischen Resonators ändert und dadurch eine Verschiebung der optischen Länge des ersten optischen Resonators bewirkt.

16. Verfahren nach Anspruch 15, wobei das Ausgangssignal zum Abstimmen der ersten Frequenz der ersten Lichtkomponente und/oder der ersten optischen Länge verwendet wird, so dass das Ausgangssignal eine maximale Amplitude aufweist.

**Revendications**

1. Agencement de capteur optique (1 ; 100) pour mesurer un objet observable (74), l'agencement comprenant :

un circuit de génération de lumière (2 ; 102) pour générer une première composante de lumière d'une première fréquence et une seconde composante de lumière d'une seconde fréquence ;
un circuit de résonance optique (3 ; 103) qui inclut au moins un premier résonateur optique (34 ; 134) qui présente une première longueur optique, un port d'entrée (35 ; 135) et un port d'extraction (36 ; 137) ; dans lequel : la première longueur optique est variable en fonction de l'objet observable ; dans lequel :
l'au moins un circuit de génération de lumière est couplé au circuit de résonance optique de telle sorte que les première et seconde composantes de lumière soient alimentées à l'intérieur du circuit de résonance optique et que la première composante de lumière soit alimentée sur le port d'entrée du premier résonateur optique via un premier chemin optique (32 ; 132) et que la seconde composante de lumière ne soit pas alimentée à l'intérieur du premier résonateur optique ;
un coupleur optique (4) qui est couplé au circuit de résonance optique ; dans lequel : le port d'extraction du premier résonateur optique est couplé au coupleur optique via une partie de continuation (37 ; 136) du premier chemin optique et le coupleur est configuré pour superposer la première composante de lumière et la seconde composante de lumière et pour synchroniser un bruit de phase entre la première composante de lumière et la seconde composante de lumière ; et

une unité de détecteur (5 ; 105) qui est couplée au coupleur optique et qui reçoit les première et seconde composantes de lumière superposées et qui est configurée pour émettre en sortie un signal de sortie (150) qui représente une différence en termes de fréquence entre les première et seconde fréquences respectivement des première et seconde composantes de lumière ; dans lequel : le signal de sortie est configuré de manière à ce qu'il inclue un signal qui présente une fréquence de battement des première et seconde composantes de lumière superposées ; dans lequel :

l'objet observable est une substance qui a pour effet que l'indice de réfraction du premier résonateur optique varie et qui génère de ce fait un décalage de la longueur optique du premier résonateur optique.

2. Agencement de capteur optique selon l'une quelconque des revendications précédentes, dans lequel le circuit de génération de lumière comprend au moins des premier et second lasers (21, 22 ; 121, 122), le premier laser émettant la première composante de lumière et le second laser émettant la seconde composante de lumière.

3. Agencement de capteur optique selon la revendication 2, dans lequel les premier et second lasers sont couplés thermiquement.

4. Agencement de capteur optique selon l'une quelconque des revendications 2 ou 3, dans lequel le circuit de génération de lumière comprend en outre un laser maître (20 ; 120) qui est couplé aux premier et second lasers, le laser maître étant configuré pour bloquer en termes d'injection les premier et second lasers.

5. Agencement de capteur optique selon la revendication 4, dans lequel le laser maître est couplé thermiquement aux premier et second lasers.

6. Agencement de capteur optique selon l'une quelconque des revendications précédentes, dans lequel le circuit de génération de lumière est découplé thermiquement du circuit de résonance optique.

7. Agencement de capteur optique selon l'une quelconque des revendications précédentes, dans lequel l'objet observable est au moins une substance qui doit être détectée et le premier résonateur optique est au moins partiellement recouvert par un matériau de recouvrement (75) pour adsorber de façon sélective ladite substance et dans lequel le matériau de recouvrement est configuré de telle sorte que la première longueur optique soit modifiée lorsque la substance entre en contact avec le matériau de recouvrement.

8. Agencement de capteur optique selon l'une quelconque des revendications précédentes, dans lequel le circuit de résonance optique inclut en outre un second résonateur optique (134') qui présente une seconde longueur optique, dans lequel la seconde composante de lumière est alimentée à l'intérieur du second résonateur optique, et un port d'extraction (137') du second résonateur optique est couplé au coupleur optique.

9. Agencement de capteur optique selon la revendication 8, dans lequel le second résonateur optique est encapsulé.

10. Agencement de capteur optique selon l'une quelconque des revendications précédentes, dans lequel l'au moins un premier résonateur optique est un résonateur à micro-anneau, un résonateur de Fabry-Pérot ou un résonateur à cristaux photoniques.

11. Agencement de capteur optique selon l'une quelconque des revendications précédentes, dans lequel le signal de sortie est un signal électrique.

12. Agencement de capteur optique selon l'une quelconque des revendications précédentes, dans lequel l'unité de détecteur inclut au moins soit un photodétecteur, soit un photodétecteur équilibré.

13. Agencement de capteur optique selon l'une quelconque des revendications précédentes, comprenant en outre un circuit de commande (6 ; 106) dont la fonction est d'analyser le signal de sortie et qui est couplé au circuit de génération de lumière de telle sorte que la première fréquence de la première composante de lumière puisse être accordée par rapport à une première fréquence de résonance qui correspond à la première longueur optique du premier résonateur optique.

14. Agencement de capteur optique selon la revendication 13, dans lequel le circuit de commande est en outre couplé au circuit de résonance optique de telle sorte que l'au moins une première longueur optique puisse être accordée.

15. Procédé pour mesurer un objet observable à l'aide d'un agencement de capteur optique, le procédé comprenant les étapes qui suivent :

la génération d'une première composante de lumière d'une première fréquence et d'une seconde composante de lumière d'une seconde fréquence ;

l'alimentation de la première composante de lumière, via un premier chemin optique (32 ; 132) sur un port d'entrée d'un premier résonateur optique d'une première longueur optique, le premier résonateur optique étant une partie d'un circuit de résonance optique et comportant également un port d'extraction ;

la superposition de la première composante de lumière de la première fréquence en provenance du port d'extraction via une partie de continuation (36 ; 136) du premier chemin optique avec la composante de lumière de la seconde fréquence selon une lumière superposée ;

la synchronisation d'un bruit de phase entre les première et seconde composantes de lumière ;

la détection des première et seconde composantes de lumière superposées et l'extraction d'un signal de sortie qui est indicatif d'une différence en termes de fréquence entre les première et seconde composantes de lumière, dans lequel le signal de sortie est configuré de manière à ce qu'il inclue un signal qui présente une fréquence de battement des première et seconde composantes de lumière superposées ; dans lequel :

l'objet observable est une substance qui a pour effet que l'indice de réfraction du premier résonateur optique varie et qui génère de ce fait un décalage de la longueur optique du premier résonateur optique.

16. Procédé selon la revendication 15, dans lequel le signal de sortie est utilisé pour accorder la première fréquence de la première composante de lumière et/ou la première longueur optique, de telle sorte que le signal de sortie présente une amplitude maximale.

Fig. 1

Fig. 3

$$\lambda_{12}/2$$

Fig. 4

Fig. 2

Fig. 5

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2515099 A1
- WO 2011000494 A